# EUROPEAN PATENT APPLICATION

(11) **EP 3 241 999 A1**
(43) Date of publication of application: **08.11.2017**
(21) Application number: 17167220.7
(22) Date of filing: 20.04.2017
(51) Int. Cl.: F01D 25/12, F01D 25/14, F02C 7/18

(54) **VENTILATION SYSTEM FOR TURBOMACHINE USING BLADELESS AIRFLOW AMPLIFIER**

(30) Priority: 22.04.2016 US 201615135866
(71) Applicant: General Electric Company, Schenectady, NY 12345 (US)
(72) Inventor: LAING, Donald Gordon, Houston, TX Texas 77015 (US); CORDOVA MAGAÑA, Jose Antonio, 76146 Queretaro (MX); GONZALEZ TELLEZ, Victor Alfonso, 76146 Queretaro (MX); SANCHEZ RUBIO, Oswaldo Alberto, 76146 Queretaro (MX)
(74) Representative: Lee, Brenda

(57) **Abstract**

A ventilation system (201, 401) for a turbomachine enclosure (220) includes: a bladeless airflow amplifier (250, 350, 450, 250A-F, 450A-B) configured to pass an airflow (125, 126, 224, 226, 252, 253, 255, 256, 352, 452, 470) through at least a portion (276) of the turbomachine enclosure (220); and an amplifier airflow source (254, 254A-C, 454, 454A-C) fluidly coupled to the bladeless airflow amplifier (250, 350, 450, 250A-F, 450A-B) for providing an operative airflow (256) to operate the bladeless airflow amplifier (250, 350, 450, 250A-F, 450A-B). The ventilation system (201, 401) may be employed with or without a conventional vent fan system (138).

## Description

### BACKGROUND OF THE INVENTION

The disclosure relates generally to power generation and mechanical drive equipment, and more particularly, to a system including a bladeless airflow amplifier for a turbomachine enclosure and a system including the same.

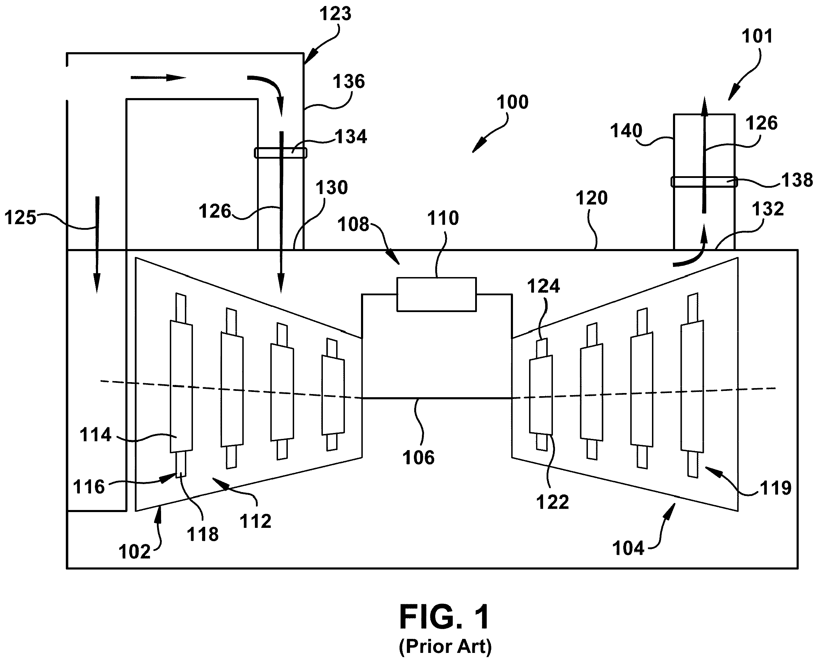

Turbomachines such as gas turbine engines, steam turbine engines, jet engines, generators, etc., oftentimes require a ventilation system. The ventilation system typically includes one or more vent fans used to pass an airflow through a turbomachine enclosure to cool and provide a suitable environment for the equipment within the system, and, where necessary, dilute any fuel leaks to minimize any potential hazard. FIG. 1 shows an illustrative gas turbine engine 100 including a conventional ventilation system 101. Gas turbine engine 100 includes a compressor portion 102 operatively coupled to a turbine portion 104 through a shared compressor/turbine shaft 106. Compressor portion 102 is also fluidly connected to turbine portion 104 through a combustor assembly 108. Combustor assembly 108 includes one or more combustors 110. Combustors 110 may be mounted to turbomachine 100 in a wide range of configurations including, but not limited to, being arranged in a can-annular array. Compressor portion 102 includes a plurality of compressor rotor wheels 112. Rotor wheels 112 include a first stage compressor rotor wheel 114 having a plurality of first stage compressor rotor blades 116 each having an associated airfoil portion 118. Similarly, turbine portion 104 includes a plurality of turbine rotor wheels 119 including a first stage turbine wheel 122 having a plurality of first stage turbine rotor blades 124.

A gas turbine enclosure 120 encloses portions of gas turbine engine 100. Turbine enclosure 120 may be coupled to an airflow intake 123 that directs an airflow 125 to compressor portion 102 and an airflow 126 into turbomachine enclosure 120 through an airflow inlet opening 130. Airflow intake 123 can take a variety of forms and may include a variety of ancillary structures such as but not limited to: intake shrouds, filters, noise reduction equipment, intake fans, etc. Airflow 125 to compressor portion 102 is compressed by compressor portion 102 and used as the operative fluid in combustor assembly 108 and turbine portion 104. Airflow 126 to turbomachine enclosure 120 is used to cool parts of the turbomachine, e.g., combustor assembly 108, turbine portion 104, and other auxiliary equipment within the enclosure, and is eventually vented to atmosphere through an airflow outlet opening 132. While airflow 126 is illustrated as being formed from air from air intake 123, it is also conventional for it to be formed from a separate ventilation air intake (not shown). In any event, in conventional systems, a vent fan 134 may be positioned in a shroud 136 of air intake 123 to form airflow 126, and/or a vent fan 138 may be positioned in a ventilation air exhaust shroud 140. Vent fans are typically induced draft (negative pressure vent fan 138) for power generation applications and forced draft (positive pressure vent fan 134) for oil and gas mechanical drive applications.

In any case, the vent fans are typically either direct drive or belt driven by electric motors. One challenge with direct drive fans is that they typically sit in the airflow path, e.g., within shrouds 136, 140 that defines the airflow path. Since the ventilation air is typically hot (e.g., in negative pressure applications), this positioning leads to reduced motor reliability for direct drive fans. In contrast, indirect drive fans typically only have the fan in the airflow path and the motors that drive the fan are outside of the enclosure. Indirect drive vent fans however suffer from other problems such as fan bearing failures due to the hot vent air and insufficient lubrication. Further, indirect drive transmission mechanisms, such as drive belts, often fail due to poor installation, shock loads during start-up and insufficient maintenance. Another common challenge with conventional vent fans is that their cross-section, which is typically circular, cannot be varied. Consequently, to adjust an airflow rate, the vent fans require modulating dampers and/or a variable frequency drive, each of which adds complexity and expense to the systems.

One approach to eliminate the use of vent fans for ventilation systems for gas turbine engines has been to employ an eductor that uses the exhaust from the gas turbine engine to pull ventilation air through the gas turbine enclosure and vent it with the exhaust. This approach suffers from a number of restrictions created by using the exhaust to pull in ventilation air and exiting both to atmosphere. For example, the eductor reduces gas turbine engine efficiency because of the impact on the exhaust exiting directly to atmosphere. In addition, since the exhaust is directed to atmosphere, it is not practical to use in a waste heat recovery application, further reducing efficiency where the waste heat could have been used for other power generation cycles. Further, any waste heat that is recovered, e.g., from an exhaust stack, is less effective because the exhaust is mixed with the cooler ventilation air.

### BRIEF DESCRIPTION OF THE INVENTION

A first aspect of the disclosure provides a ventilation system for a turbomachine enclosure, the ventilation system comprising: a bladeless airflow amplifier configured to pass an airflow through at least a portion of the turbomachine enclosure; and an amplifier airflow source fluidly coupled to the bladeless airflow amplifier for providing an operative airflow to operate the bladeless airflow amplifier.

A second aspect of the disclosure provides a system, comprising: a gas turbine engine enclosure; a gas turbine engine disposed in the gas turbine engine enclosure; and a ventilation system coupled to the gas turbine engine enclosure, wherein the ventilation system includes: a bladeless airflow amplifier configured to pass an airflow through at least a portion of the gas turbine engine enclosure, and an amplifier airflow source fluidly coupled to the bladeless airflow amplifier for providing an operative airflow to operate the bladeless airflow amplifier.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of a conventional ventilation system for a turbomachine.
FIG. 2 shows a schematic view of a ventilation system for a turbomachine using a bladeless air amplifier according to embodiments of the disclosure.
FIG. 3 shows a cross-sectional view of an illustrative bladeless air amplifier according to embodiments of the disclosure.
FIG. 4 shows an enlarged cross-sectional view of an illustrative bladeless air amplifier of FIG. 3 according to embodiments of the disclosure.
FIG. 5 shows a side view of another illustrative bladeless air amplifier in a turbomachine enclosure according to embodiments of the disclosure.
FIG. 6 shows an enlarged cross-sectional view of the illustrative bladeless air amplifier of FIG. 5 according to embodiments of the disclosure.
FIG. 7 shows a schematic perspective view of a ventilation system for a turbomachine using a bladeless air amplifier according to embodiments of the disclosure.
FIG. 8 shows a schematic perspective view of another ventilation system for a turbomachine using a bladeless air amplifier according to embodiments of the disclosure.
FIG. 9 shows a schematic perspective view of yet another ventilation system for a turbomachine using a bladeless air amplifier according to embodiments of the disclosure.
FIG. 10 shows a schematic perspective view of another ventilation system for a turbomachine using a bladeless air amplifier according to embodiments of the disclosure.
FIG. 11 shows a schematic perspective view of an arrangement of amplifier airflow sources for a ventilation system using a bladeless air amplifier according to embodiments of the disclosure.
FIG. 12 shows a schematic perspective view of a ventilation system for a turbomachine using a bladeless air amplifier according to embodiments of the disclosure.
FIG. 13 shows a schematic view of another ventilation system for a turbomachine using a bladeless air amplifier according to embodiments of the disclosure.
FIG. 14 shows a schematic view of an arrangement of ventilation systems for a number of turbomachines with each system using a bladeless air amplifier according to embodiments of the disclosure.
FIG. 15 shows a schematic view of a bladeless air amplifier with many operative airflow sources according to embodiments of the disclosure.
FIG. 16 shows a schematic view of an alternative embodiment of a ventilation system according to the disclosure.
FIG. 17 shows a schematic view of another alternative embodiment of a ventilation system according to the disclosure.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As indicated above, the disclosure provides a ventilation system for a turbomachine enclosure that uses a bladeless airflow amplifier to pass an airflow through at least a portion of the turbomachine enclosure.

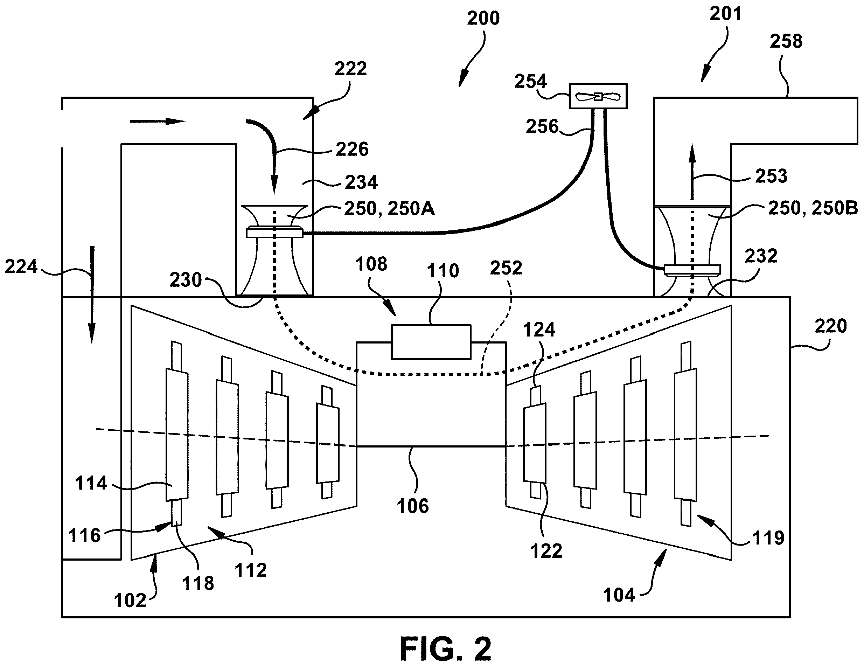

FIG. 2 shows an illustrative turbomachine 200 in the form of a gas turbine engine. In this example, turbomachine 200 includes substantially the same operative structures as turbomachine 100 of FIG. 1. That is, compressor portion 102 operatively coupled to turbine portion 104 through shared compressor/turbine shaft 106, and combustor assembly 108 includes one or more combustors 110. Combustors 110 may be mounted to turbomachine 200 in a wide range of configurations including, but not limited to, being arranged in a can-annular array. FIG. 2 also shows rotor wheels 112, first stage compressor rotor wheel 114, first stage compressor rotor blades 116 each having an associated airfoil portion 118, turbine rotor wheels 119 including first stage turbine wheel 122 having first stage turbine rotor blades 124. While the teachings of the disclosure will be applied to a gas turbine engine, it is emphasized that the ventilations system disclosed can be applied to practically any form of turbomachine.

Turbomachine 200 also includes a gas turbine enclosure 220 that encloses portions of the gas turbine engine. Turbine enclosure 220 may include any conventional structural elements (not shown) capable of positioning side panels thereof. Turbine enclosure 220 may be coupled to an airflow intake 222 that directs an airflow 224 to compressor portion 102 in a conventional fashion (i.e., using compressor portion 102 to draw in air), and an induced airflow 226 into turbomachine enclosure 220 through an airflow inlet opening 230 in enclosure 220. As will be described, induced airflow 226 may be formed by one or more bladeless air amplifiers 250 according to embodiments of the disclosure. Airflow intake 222 can take a variety of forms and may include a variety of ancillary structures such as but not limited to: intake shrouds, filters, noise reduction equipment, intake fans, dampers, etc. Airflow 224 to compressor portion 102 is compressed by compressor portion 102 and used as the operative fluid in combustor assembly 108 and turbine portion 104. Airflow 226 to turbomachine enclosure 220 is used to cool parts of turbomachine, e.g., combustor assembly 108, turbine portion 104, etc., and may be eventually vented to atmosphere through an airflow outlet opening 232. While induced airflow 226 is illustrated as being formed from air from air intake 222, it is also conventional for it to be formed from a separate ventilation air intake (not shown).

In accordance with embodiments of the disclosure, a ventilation system 201 for turbomachine enclosure 220 is provided that replaces (and/or augments) vent fans (e.g., 134, 138 in FIG. 1). As shown in FIG. 2, ventilation system 201 may include a bladeless airflow amplifier 250 (250A, 250B in FIG. 2) configured to pass an airflow 252 (from induced airflow 226) through at least a portion of turbomachine enclosure 220. Ventilation system 201 may also include an amplifier airflow source 254 fluidly coupled to bladeless airflow amplifier 250 for providing an operative airflow 256 to operate the bladeless airflow amplifier 250. As will be described, amplifier airflow source 254 may take any form capable of providing operative airflow 256 to operate bladeless airflow amplifier 250. As will also be described, in some embodiments, amplifier airflow source 254 may include mechanisms to modulate airflow 256 provided to air amplifier 250, e.g., to lower ambient temperature, pressures, flow rate, etc.

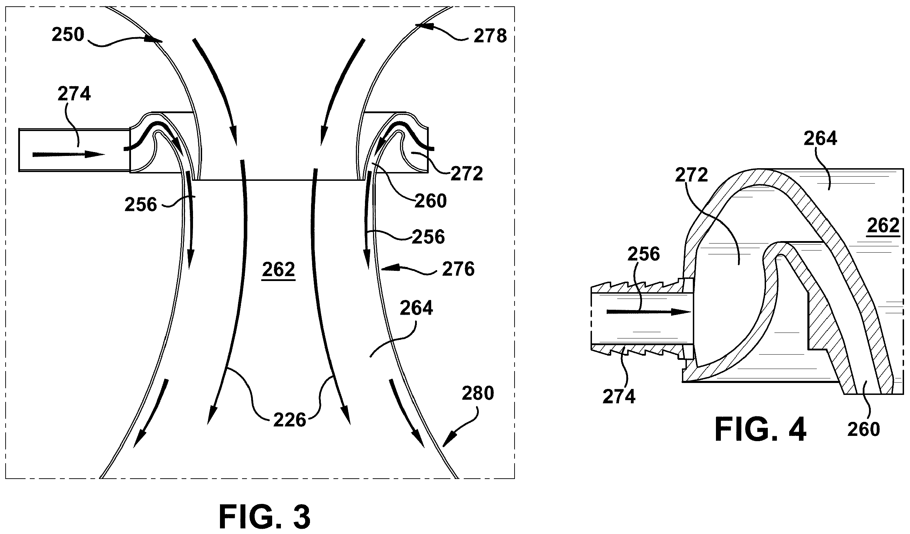

Bladeless airflow amplifier 250 can take a variety of forms, and may be referred to alternatively, among other names, as an air multiplier, a bladeless fan and a bladeless air fan. In any event, bladeless airflow amplifier 250 may include any apparatus that passes operative airflow 256 from one or more openings about an internal surface of a duct such that operative airflow 256 acts to create an airflow through the duct of greater flow rate than that of operative airflow 256. Operative airflow 256 may be delivered to the internal surface by a manifold about the duct. FIG. 3 shows a cross-sectional view of one illustrative form of bladeless air amplifier 250 employed in embodiments of the disclosure; and FIG. 4 shows an enlarged cross-sectional view of part of a manifold and openings of the duct of the bladeless air amplifier 250 of FIG. 3. As shown in FIGS. 3 and 4, one or more openings 260 are provided about an internal surface 262 of a duct 264 such that operative airflow 256 delivered through opening(s) 260 from a manifold 272 acts to create induced airflow 226 through duct 264. Induced airflow 226 has a greater flow rate than that of operative airflow 256. The direction of airflow 226 matches that of operative airflow 256 as it exits openings 260 - see arrows in the drawings. Operative airflow 256 is delivered about internal surface 262 by way of a manifold 272 that may surround duct 264, and may be delivered to manifold 272 by any form of conduit 274. As illustrated, operative fluid 256, upon exiting opening(s) 260, follows internal surface 262 due to the Coand 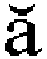 effect. As shown in FIG. 3, duct 264 typically has a narrowing portion 276 with opposing wider ends 278 (upstream) and 280 (downstream), which enables the Coand 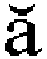 effect to induce airflow 226 therethrough. Wider upstream end 278 ensures a smooth airflow into airflow amplifier 250 and, hence, a low pressure drop. However, wider upstream end 278 can be eliminated if the profile of the outside surface of duct 264 provides a similar functioning, e.g., such that a smooth airflow can be achieved into duct 264 through a middle thereof.

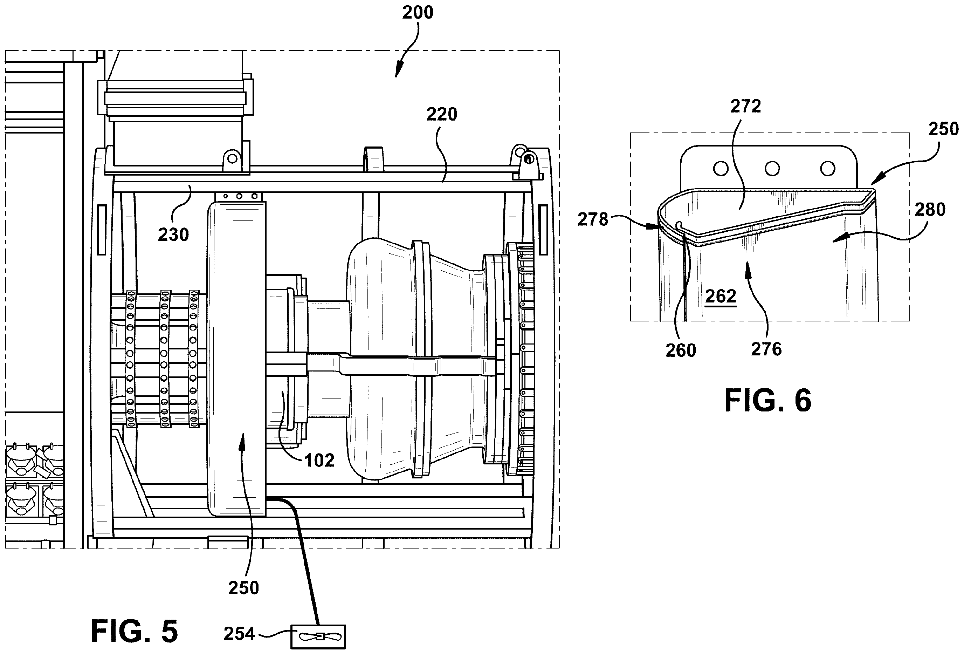

As will be described, bladeless airflow amplifier 250 can have a smaller diameter when placed in-line with, for example, an airflow inlet opening 230 (FIG. 2) or an airflow outlet opening 232 (FIG. 2) in turbomachine enclosure (FIGS. 2, 7 and 8). In contrast, as shown in FIGS. 5 and 6, bladeless airflow amplifier 250 may have a wider diameter when placed to surround at least a portion of turbomachine 200 (FIG. 5 only), e.g., a particular component like a compressor portion 102. In this case, manifold 272 (FIG. 6) may be enlarged. In this embodiment, among others, bladeless airflow amplifier 250 is positioned within turbomachine enclosure 220 (FIG. 5). Further, bladeless airflow amplifier 250 may surround at least a portion of turbomachine 200, e.g., a compressor portion 102 to cool and ventilate that portion and others downstream.

Each bladeless airflow amplifier 250 may be made of any material capable of withstanding the operational environment in which it is placed, e.g., a high temperature environment within turbomachine enclosure 220 of between approximately 65°C and 93°C (150°F-200°F). Illustrative materials may include steel, plastic, sintered metals, etc. Each bladeless airflow amplifier 250 may be formed using any now known or later developed technique appropriate for the material used, e.g., sheet metal bending, welding and/or laser metal deposition for metal; three dimensional printing for plastics; cast molding; etc. Each bladeless airflow amplifier 250 may be fixedly mounted to adjacent structure, e.g., turbomachine enclosure 220, as necessary, with any conventional fixing technique, e.g., nuts/bolts, etc.

Referring to FIGS. 2 and 7-14, various ventilation systems employing bladeless airflow amplifier 250 with a turbomachine enclosure 220 are illustrated.

In FIG. 2, in one embodiment, a first bladeless airflow amplifier 250A is coupled to airflow inlet opening 230 in turbomachine enclosure 220 to pass airflow 226 into and through turbomachine enclosure 220, and a second bladeless airflow amplifier 250B is coupled to airflow outlet opening 232 in turbomachine enclosure 220 to pull airflow 252 through turbomachine enclosure 220. In this fashion, rather than provide a vent fan, first bladeless airflow amplifier 250A can pull air, e.g., from air intake 222, another dedicated air intake or otherwise from atmosphere, into turbomachine enclosure 220. Simultaneously, second bladeless airflow amplifier 250B can pull air out of turbomachine enclosure 222, e.g., to an exhaust shroud 258 to atmosphere. Airflow 252 created by induced airflow 226 is shown with a dotted line in turbomachine enclosure 220 because the path of the airflow may vary. Note, in this embodiment, airflow 252 through turbomachine enclosure 220 may include both induced airflow 226 and operative fluid 256 supplied to first bladeless airflow amplifier 250A. Similarly, an airflow 253 exiting second bladeless airflow amplifier includes airflow 252 and operative fluid 256 supplied to second bladeless airflow amplifier 250B.

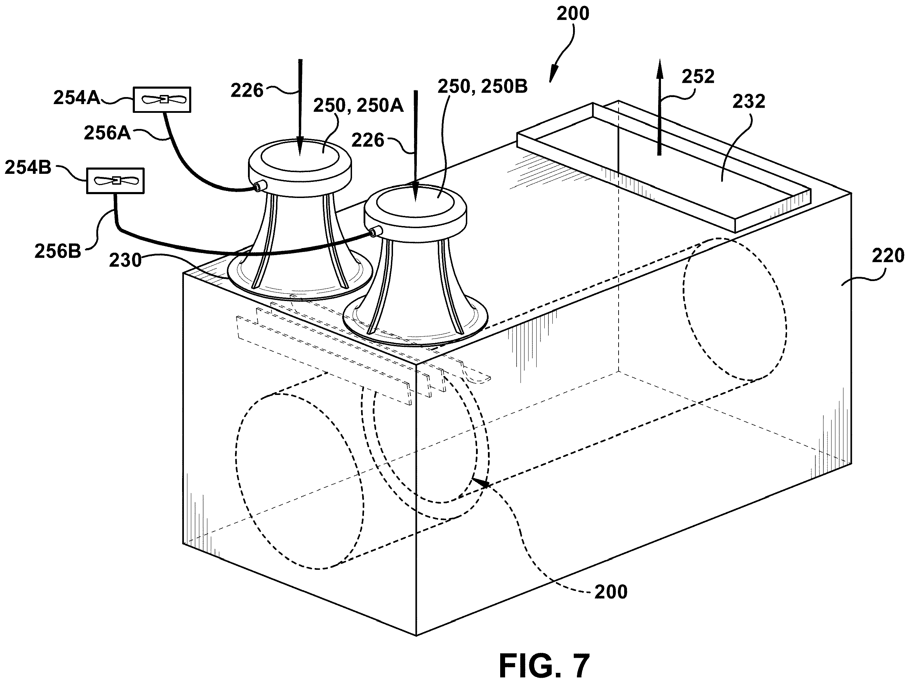

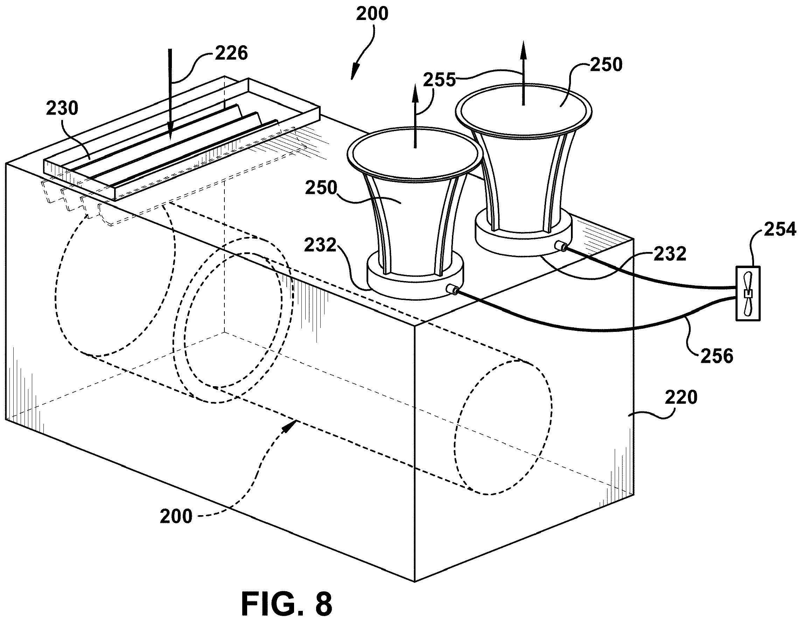

FIGS. 7-10 show schematic views of various systems employing bladeless airflow amplifier 250 with a turbomachine enclosure 220. FIG. 7 shows a schematic perspective view of turbomachine enclosure 220 including bladeless airflow amplifier 250 (two shown side-by-side) coupled to airflow inlet opening 230 in turbomachine enclosure 220 to pass induced airflow 226 into turbomachine enclosure 220, forming airflow 252 (FIG. 2 and FIG. 7). Here, bladeless airflow amplifier(s) 250 merely pushes airflow 226 into enclosure 220, with no pull from enclosure at airflow outlet opening 232. In contrast in FIG. 8, bladeless airflow amplifier 250 (two shown) is coupled to airflow outlet opening 232 in turbomachine enclosure 220 to pass an airflow 255 out of turbomachine enclosure 220. Here, bladeless airflow amplifier(s) 250 merely pulls induced airflow 226 through enclosure 220, with no pushing of airflow into the enclosure at airflow inlet opening 230. Airflow 255 exiting enclosure 220 includes both induced airflow 226 and operative fluid 256 supplied to bladeless airflow amplifier(s) 250.

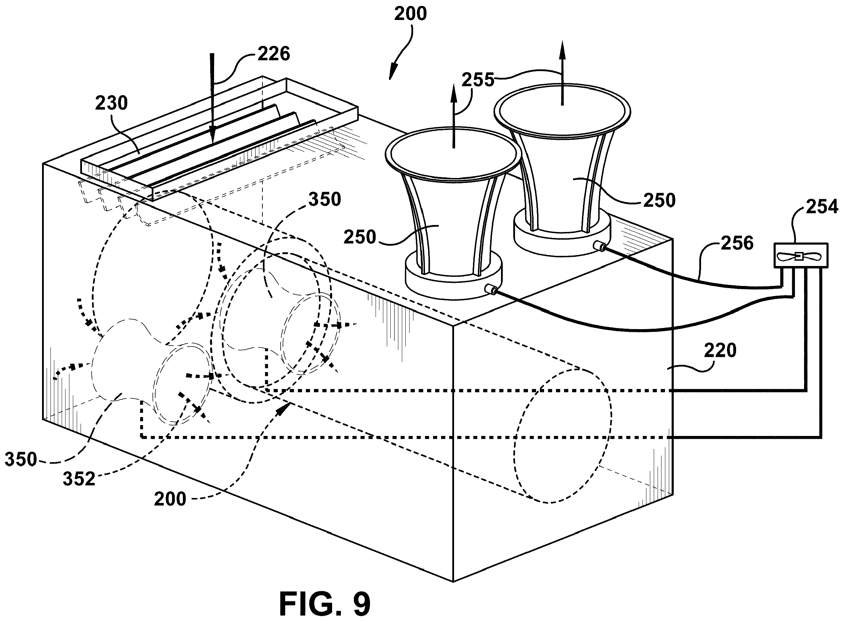

FIG. 9 shows a perspective schematic view of an embodiment similar to that of FIG. 8 except another bladeless airflow amplifier 350 is coupled to amplifier airflow source 254 and bladeless airflow amplifier 350 is positioned in a portion of turbomachine enclosure 220. In this fashion, bladeless airflow amplifier 350 can be positioned to, for example, move heavier than air gases through turbomachine enclosure 220 at a lower portion of the enclosure, and/or move airflow 352 within a desired area, e.g., across a desired component of turbomachine 200, within turbomachine enclosure 220. Any number of air amplifiers 350 may be provided within enclosure 220. Here, a single amplifier airflow source 254 feeds two air amplifiers 250, 350.

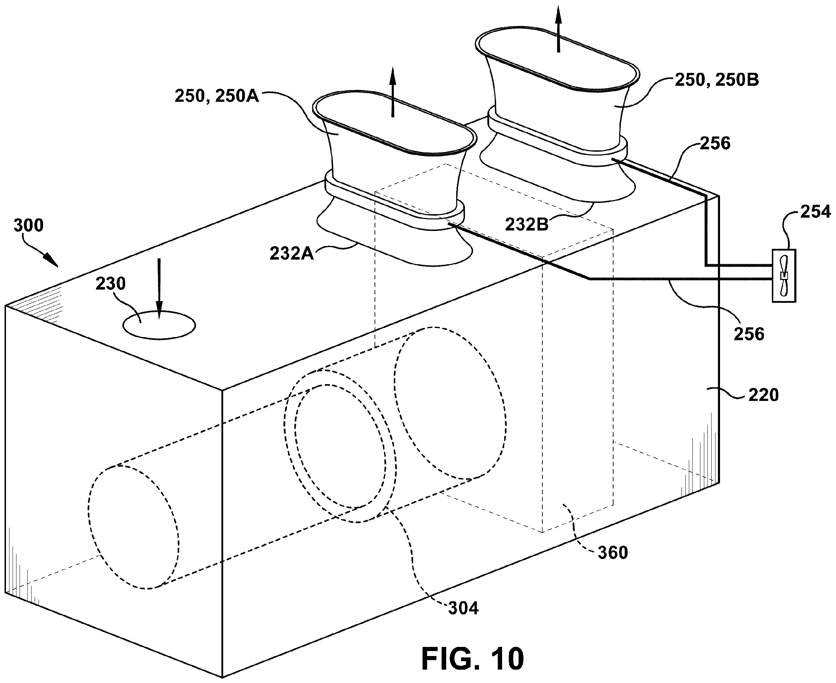

FIG. 10 shows a schematic perspective view of a turbomachine 300 in the form of a gas turbine engine 304 that includes an exhaust collector 360 operatively coupled thereto. Gas turbine engine 304 is substantially similar to the previously described gas turbine engine 104 (FIG. 2). As understood in the art, exhaust collector 360 includes a chamber that collects exhaust gas from turbine portion 304 of gas turbine engine for directing the exhaust out of turbomachine (gas turbine engine) enclosure 220. Here, a first bladeless airflow amplifier 250A is coupled to first airflow outlet opening 232A upstream of exhaust collector 360 and a second bladeless airflow amplifier 250B is coupled to a second airflow outlet opening 232B downstream of exhaust collector 360. In this fashion, bladeless airflow amplifiers 250A, 250B can act to provide improved cooling to, and around, exhaust collector 360. FIG. 10 also illustrates that bladeless airflow amplifier 250 is not limited to a circular cross-section, and may have any cross-section capable of creating induced airflow 226 (FIG. 3), e.g., circular, oblong, oval, etc. In this fashion, bladeless airflow amplifiers can be used in a wide variety of space constrained areas typically inaccessible to conventional vent fans.

In the above-described embodiments of FIGS. 2, and 8-10, each of a group of bladeless airflow amplifier(s) 250, 350 are coupled to a single amplifier airflow source 254 that delivers operative airflow 256 thereto. As shown in FIG. 7, according to other embodiments, each bladeless airflow amplifier 250A, 250B may have its own dedicated amplifier airflow source 254A, 254B, respectively. That is, as shown in FIG. 7, a first amplifier airflow source 254A may be fluidly coupled to a first bladeless airflow amplifier 250A for providing a first operative airflow 256A to operate the first bladeless airflow amplifier, and a second amplifier airflow source 254B may be fluidly coupled to the second bladeless airflow amplifier 250B for providing a second operative airflow 256B to operate the second bladeless airflow amplifier. While two of each are shown and described in FIG. 7, any number may be employed.

Each bladeless airflow amplifier 250, 350 described herein can be positioned in or attached to any necessary airflow path shroud, e.g., an exhaust shroud 258 in FIG. 2. Each shroud may include any necessary turns and/or dampers to protect the amplifier from adverse environmental conditions, e.g., rain, snow, etc.

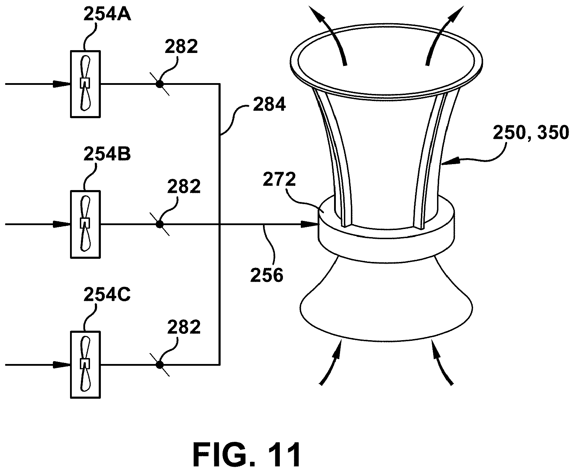

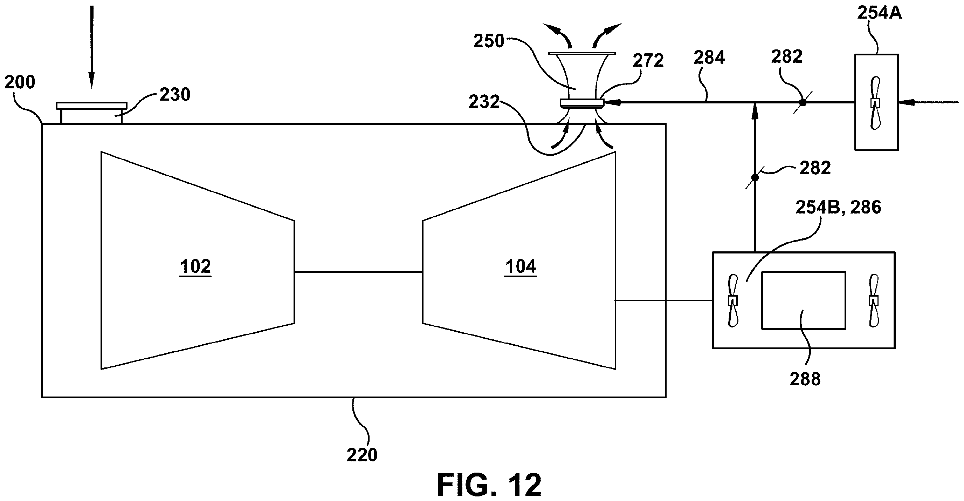

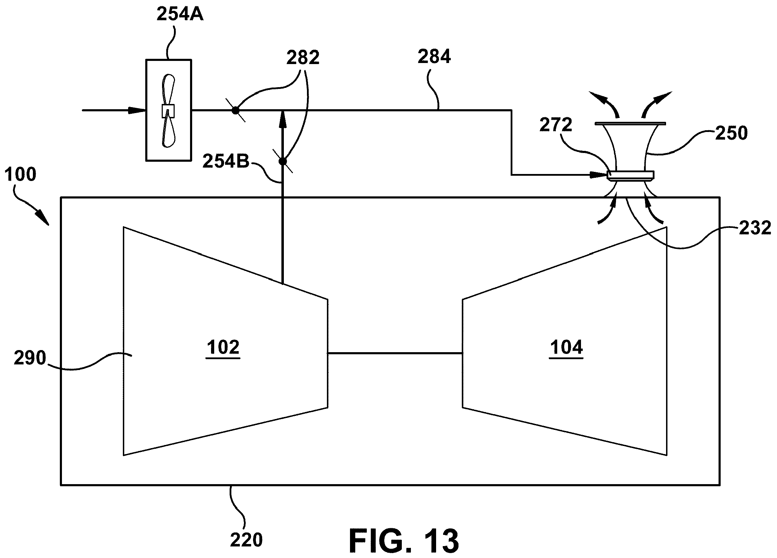

Amplifier airflow source(s) 254 can take any of a large variety of forms, each of which is outside of the hot airflow path (FIGS. 2, 7-10), which improves reliability of the ventilation system. In one embodiment, each amplifier airflow source 254 can include one or more direct or indirect drive circular fans outside of the hot airflow path (FIGS. 2, 7-11). Amplifier airflow source(s) 254 can also include air from a separate station compressor or compressors (also schematically shown FIGS. 2, 7-11). Alternatively, as shown in FIG. 12, amplifier airflow source 254 may include air supplied from a cooling fan 286 of a generator 288, and/or, as shown in FIG. 13, amplifier airflow source 254 may include air supplied from a compressor 290 of turbomachine compressor portion 102 itself. To further illustrate the various options available, FIGS. 11-14 show schematic views of various amplifier airflow source 254 configurations. In one embodiment, shown in FIG. 11, amplifier airflow source 254 may include a plurality of amplifier airflow sources 254A, 254B, 254C each fluidly coupled to single bladeless airflow amplifier 250, 350 to provide operative airflow 256. Each source 254A-C may take any of the aforementioned types and each may include its own valve or damper 282 to control the cumulative operative airflow 256 provided to bladeless airflow amplifier 250, 350. The output of each amplifier airflow source 254A-C may be fed to manifold 272 of the airflow amplifier, either collectively from an upstream mixing chamber (or manifold) 284 (as shown) or individually to manifold 272. While three amplifier airflow sources 254A-C are illustrated, any number can be employed.

As shown in FIG. 12, where more than one amplifier airflow source 254A, 254B are used, they need not need to take the same form. In the example shown, amplifier airflow source 254B includes a cooling fan 286 of a generator 288 that may be operatively coupled to turbomachine 200 such that cooling fan 286 provides at least a portion of operative airflow 256 (FIG. 3). In FIG. 12, amplifier airflow source 254A may include, among others, a direct or indirect drive fan, for providing another portion of operative airflow 256 (FIG. 3). Amplifier airflow source 254A may be needed during start-up to ventilate turbomachine enclosure 220, e.g., to purge the enclosure of any gas, prior to gas turbine starting because amplifier airflow source 254B may not be available until the gas turbine is up and running and generator 288 is rotating.

In FIG. 13, an amplifier airflow source 254B includes a compressor 290, i.e., of compressor portion 102, configured to provide an airflow to the turbomachine, i.e., turbine portion 104. Here, compressor 290 provides at least a portion of the operative airflow, e.g., with another source 254A such as a direct or indirect drive fan outside of enclosure 220 and not within the heated airflow path. Valve 282 from compressor 290 may include some form of regulating valve to modulate the air flow/pressure exiting compressor 290 and supplied to bladeless airflow amplifier 250. Amplifier airflow source 254A may be needed during start-up to ventilate turbomachine enclosure 220, e.g., to purge the enclosure of any gas, prior to gas turbine starting because amplifier airflow source 254B may not be available until the gas turbine is up and running.

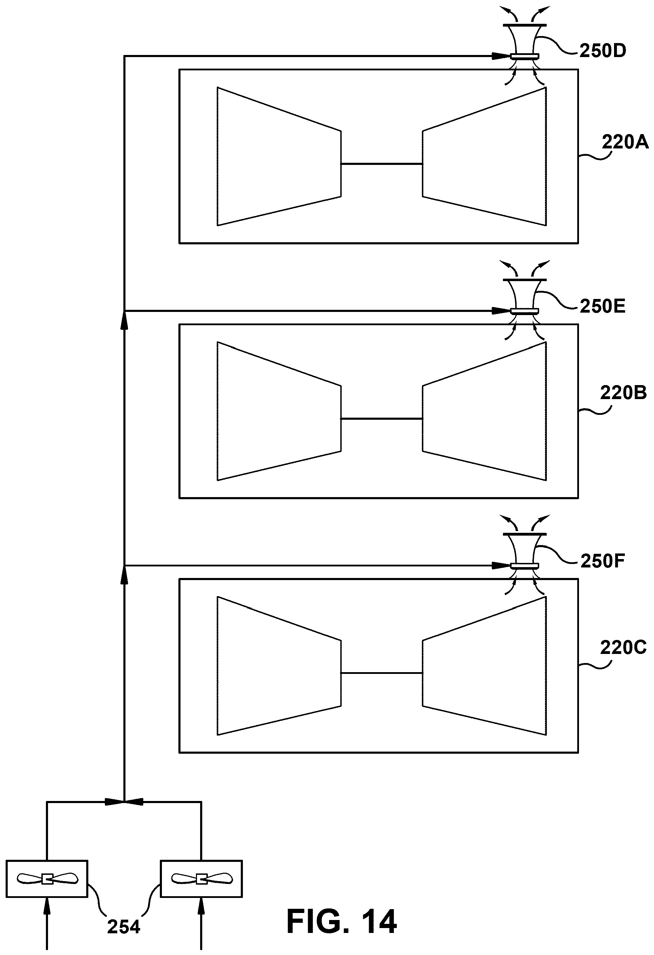

FIG. 14 shows another alternative embodiment in which a plurality of bladeless airflow amplifiers 250D, 250E, 250F are illustrated. Here, each bladeless airflow amplifier 250D, 250E, 250F is coupled to a separate turbomachine enclosure 220A, 220B, 220C, i.e., of a number of gas turbine engines. Amplifier airflow source(s) 254 fluidly couple to each of the plurality of bladeless airflow amplifiers 250D-F for providing the operative airflow to operate each of the plurality of bladeless airflow amplifiers, and may include any of the aforementioned types of airflow sources.

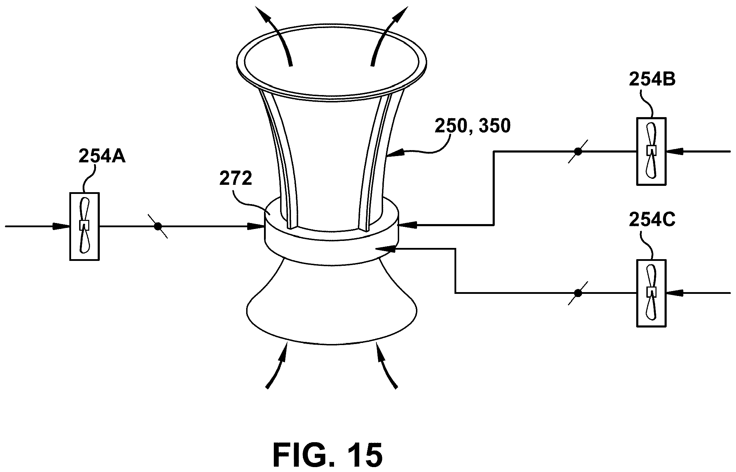

With further regard to FIGS. 11-14 and in any of the embodiments herein in which more than one amplifier airflow source 254A-C, etc., is provided, each amplifier airflow source 254 may deliver its respective operative airflow 256 to an upstream mixing chamber 284 (FIGS. 11-14) in which the respective operative airflows 256 commingle prior to delivery to airflow amplifier manifold 272. Alternatively, as shown schematically in FIG. 15, for the various embodiments in which more than one amplifier airflow source 254A-C, etc., are provided, each amplifier airflow source 254 may deliver its respective operative airflow 256 directly to manifold 272 via a number of inlets to manifold 272.

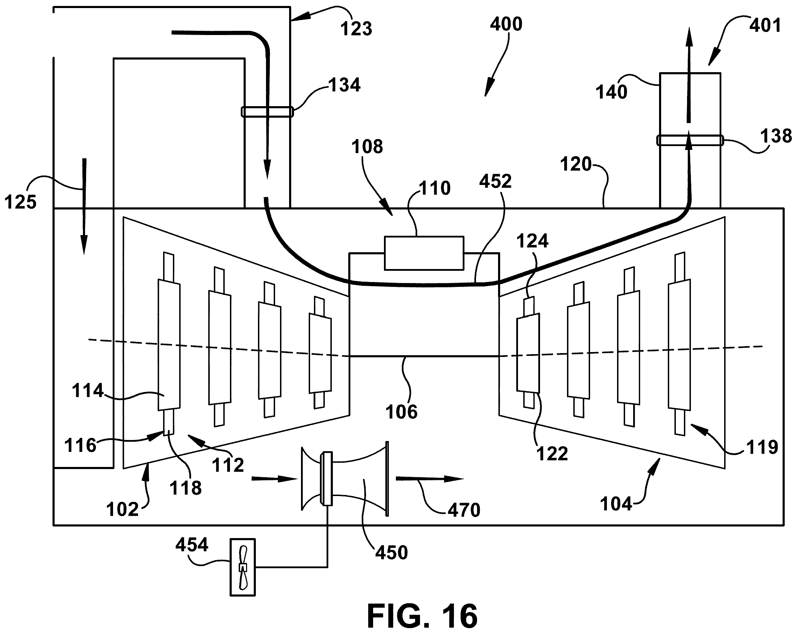

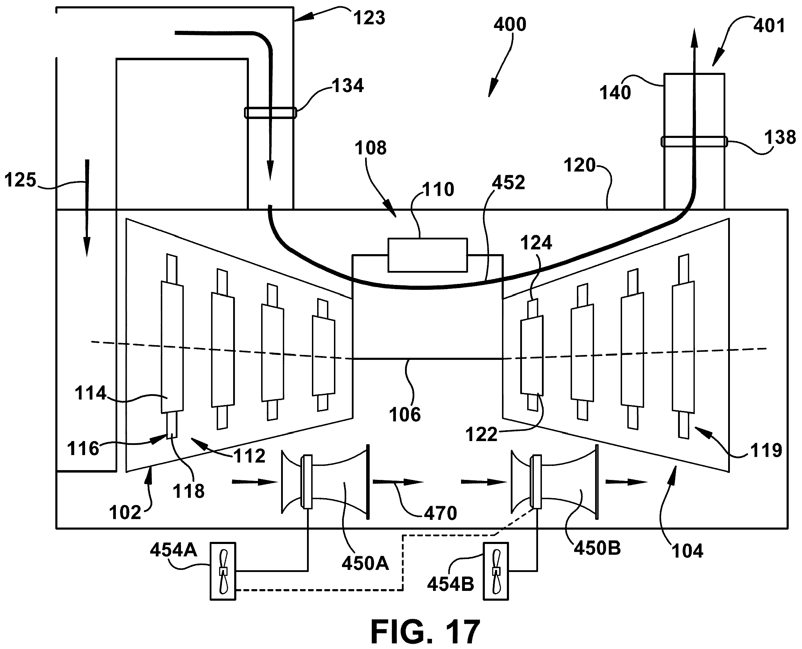

FIGS. 16-17 show schematic views of alternative embodiments of a turbomachine 400 employing a ventilation system 401 according to the disclosure. Ventilation system 401 includes many of the features of a conventional system as described relative to FIG. 1. Most notably, ventilation system 401 includes a vent fan 134 positioned in an air intake 123 and/or a vent fan 138 positioned in a ventilation air exhaust shroud 140 to pass an airflow 452 through at least a portion of turbomachine enclosure 120. Vent fans 134, 138 are typically induced draft (negative pressure vent fan 138) for power generation applications and forced draft (positive pressure vent fan 134) for oil and gas mechanical drive applications. In contrast to conventional systems, ventilation system 401 also include a bladeless airflow amplifier 450 configured to direct an airflow 470 within a portion of turbomachine enclosure 120. That is, bladeless airflow amplifier 450 is mounted within turbomachine enclosure 120. Airflow 470 may be directed to perform a number of functions such as cooling a particular part of the gas turbine engine including associated auxiliary equipment, e.g., fuel valves, instruments, etc. inside the enclosure but not mounted on the turbine, and/or moving heavier than air gases within turbomachine enclosure 120. In terms of the former, bladeless airflow amplifier 450 may at least partially encircle a portion of the gas turbine engine as illustrated in FIG. 5, changed in shape to match a portion of the gas turbine engine as illustrated in FIG. 10. Ventilation system 401 may also include an amplifier airflow source 454 fluidly coupled to bladeless airflow amplifier 450 for providing an operative airflow (not labeled) to operate the bladeless airflow amplifier. FIG. 17 shows an embodiment including a plurality of bladeless airflow amplifiers 450A, 450B mounted within turbomachine enclosure 120 to direct an airflow 470 within a portion of turbomachine enclosure 120. In one example, each bladeless airflow amplifier 450A, 450B may be coupled to a single amplifier airflow source 454A (shown by phantom line) to provide the operative airflow. In another example, each bladeless airflow amplifier 450A, 450B may have its own dedicated amplifier airflow source 454A, 454B to provide the operative airflow. In any event, any amplifier airflow source 454, 454A, 454B used in the FIGS. 16-17 embodiments may take any of the embodiments described herein. For example, as described herein, airflow amplifier source(s) 454, 454A, 454B may include a vent fan outside of the hot gas path. In another example, as shown in and described relative to FIG. 12, amplifier airflow source(s) 454, 454A, 454B may include a cooling fan 286 of a generator 288 that is operatively coupled to the turbomachine, the cooling fan providing at least a portion of the operative airflow. In another example, as shown in and described relative to FIG. 13, amplifier airflow source(s) 454, 454A, 454B may include a compressor 102 configured to provide an airflow to the gas turbine engine, the compressor providing at least a portion of the operative airflow, and may include a regulating valve 282 to modulate the airflow from the compressor for use as the amplifier airflow source.

While particular embodiments of a ventilation system employing a bladeless airflow amplifier have been illustrated and described herein, it is emphasized that the various teachings of each embodiment can be interchanged with teachings of the other embodiments.

Embodiments of the disclosure described herein use a bladeless airflow amplifier to replace, eliminate or work with a conventional fan for turbomachine ventilation. The embodiments can be used to provide the main form of ventilation airflow, and/or provide local circulation of ventilation air to provide localized cooling or local dilution of gases, such as fuel gases. The disclosure provides various configurations to be utilized so that the amplifier airflow source, regardless of its form, can be outside the hot air path from the turbomachine. As described herein, amplifier airflow source can take a variety of forms such as an externally mounted motor driven fan, air from a separate station compressor, or air supplied from the turbomachine compressor itself. Amplifier airflow source(s) can be arranged in several configurations to enhance reliability, and advantageously can, according to select embodiments, use a single airflow source for many air amplifiers. In any event, the systems described herein improve reliability compared to systems that require drive belts because the airflow energy source does not sit in the hot vent airflow path. That is, there are no moving parts within the hot vent airflow path, and if the airflow source for the air amplifier is provided by the turbomachine, then there are no moving parts associated with the air amplifier at all - eliminating any motor reliability concerns. In addition, if the airflow source is supplied by the turbomachine, then the air amplifier flowrate can be very easily regulated whereas a conventional fan would require modulating dampers or a variable frequency drive (in this case, an air supply to the amplifier would most likely also need a regulating valve). The air amplifier is also better suited to being used for both forced draft applications and induced draft applications without changes versus conventional fans. Further, bladeless air amplifiers can be configured to have various cross sectional shapes (see e.g., FIG. 10) unlike conventional fan cross sections which are circular. This adaptability enables the air amplifier to be shaped to fit confined spaces and still provide good airflow distribution. Use of the systems described herein also require very little modification to current turbomachine structure.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" as applied to a particular value of a range applies to both values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following numbered clauses:
1. A ventilation system for a turbomachine enclosure, the ventilation system comprising:
   a bladeless airflow amplifier configured to pass an airflow through at least a portion of the turbomachine enclosure; and
   an amplifier airflow source fluidly coupled to the bladeless airflow amplifier for providing an operative airflow to operate the bladeless airflow amplifier.
2. The ventilation system of clause 1, wherein the bladeless airflow amplifier is coupled to an airflow outlet opening in the turbomachine enclosure to pass the airflow out of the turbomachine enclosure.
3. The ventilation system of clause 1 or clause 2, further comprising another bladeless airflow amplifier fluidly coupled to the amplifier airflow source, the another bladeless airflow amplifier coupled to another airflow outlet opening in a portion of the turbomachine enclosure.
4. The ventilation system of any preceding clause, wherein the bladeless airflow amplifier is coupled to an airflow inlet opening in the turbomachine enclosure to pass the airflow into the turbomachine enclosure.
5. The ventilation system of any preceding clause, wherein the bladeless airflow amplifier includes a first bladeless airflow amplifier coupled to an airflow outlet opening in the turbomachine enclosure to pass the airflow out of the turbomachine enclosure, and a second bladeless airflow amplifier coupled to an airflow inlet opening in the turbomachine enclosure to pass the airflow through the turbomachine enclosure.
6. The ventilation system of any preceding clause, wherein the amplifier airflow source includes a first amplifier airflow source fluidly coupled to the first bladeless airflow amplifier for providing a first operative airflow to operate the first bladeless airflow amplifier, and a second amplifier airflow source fluidly coupled to the second bladeless airflow amplifier for providing a second operative airflow to operate the second bladeless airflow amplifier.
7. The ventilation system of any preceding clause, wherein the turbomachine includes a gas turbine engine and an exhaust collector operatively coupled to the gas turbine engine, and
   wherein the bladeless airflow amplifier includes a first bladeless airflow amplifier coupled to a first airflow outlet opening upstream of the exhaust collector and a second bladeless airflow amplifier coupled to a second airflow outlet opening downstream of the exhaust collector.
8. The ventilation system of any preceding clause, wherein the amplifier airflow source includes a plurality of amplifier airflow sources fluidly coupled to the bladeless airflow amplifier to provide the operative airflow.
9. The ventilation system of any preceding clause, wherein the amplifier airflow source includes a cooling fan of a generator that is operatively coupled to a turbomachine, the cooling fan providing at least a portion of the operative airflow.
10. The ventilation system of any preceding clause, wherein the amplifier airflow source includes a compressor configured to provide an airflow to a turbomachine, the compressor providing at least a portion of the operative airflow, and
   further comprising a regulating valve to modulate the airflow from the compressor for use as the amplifier airflow source.
11. The ventilation system of any preceding clause, wherein the bladeless airflow amplifier includes a plurality of bladeless airflow amplifiers, each bladeless airflow amplifier coupled to a separate turbomachine enclosure, and
   wherein the amplifier airflow source fluidly couples to each of the plurality of bladeless airflow amplifiers for providing the operative airflow to operate each of the plurality of bladeless airflow amplifiers.
12. The ventilation system of any preceding clause, further comprising an internal bladeless airflow amplifier positioned within the turbomachine enclosure.
13. The ventilation system of any preceding clause, wherein the internal bladeless airflow amplifier surrounds at least a portion of a turbomachine.
14. A system, comprising:
   a gas turbine engine enclosure;
   a gas turbine engine disposed in the gas turbine engine enclosure; and
   a ventilation system coupled to the gas turbine engine enclosure, wherein the ventilation system includes:
      a bladeless airflow amplifier configured to pass an airflow through at least a portion of the gas turbine engine enclosure, and
      an amplifier airflow source fluidly coupled to the bladeless airflow amplifier for providing an operative airflow to operate the bladeless airflow amplifier.
15. The system of any preceding clause, wherein the bladeless airflow amplifier is coupled to an airflow outlet opening in the gas turbine engine enclosure to pass the airflow out of the gas turbine engine enclosure.
16. The system of any preceding clause, further comprising another bladeless airflow amplifier fluidly coupled to the amplifier airflow source, the another bladeless airflow amplifier coupled to another airflow outlet opening in a portion of the gas turbine engine enclosure.
17. The system of any preceding clause, wherein the bladeless airflow amplifier is coupled to an airflow inlet opening in the gas turbine engine enclosure to pass the airflow into the gas turbine engine enclosure.
18. The system of any preceding clause, wherein the bladeless airflow amplifier includes a first bladeless airflow amplifier coupled to an airflow outlet opening in the gas turbine engine enclosure to pass the airflow out of the gas turbine engine enclosure, and a second bladeless airflow amplifier coupled to an airflow inlet opening in the gas turbine engine enclosure to pass the airflow through the gas turbine engine enclosure.
19. The system of any preceding clause, wherein the amplifier airflow source includes a first amplifier airflow source fluidly coupled to the first bladeless airflow amplifier for providing a first operative airflow to operate the first bladeless airflow amplifier, and a second amplifier airflow source fluidly coupled to the second bladeless airflow amplifier for providing a second operative airflow to operate the second bladeless airflow amplifier.
20. The system of any preceding clause, further comprising an exhaust collector operatively coupled to the gas turbine engine, and
   wherein the bladeless airflow amplifier includes a first bladeless airflow amplifier coupled to a first airflow outlet opening upstream of the exhaust collector and a second bladeless airflow amplifier coupled to a second airflow outlet opening downstream of the exhaust collector.

## Claims

1. A ventilation system (201, 401) for a turbomachine enclosure (220), the ventilation system (201, 401) comprising:
a bladeless airflow amplifier (250, 350, 450) configured to pass an airflow (125, 126, 224, 226, 252, 253, 255, 256, 352, 452, 470) through at least a portion (276) of the turbomachine enclosure (220); and
an amplifier airflow source (254, 254A-C, 454, 454A-C) fluidly coupled to the bladeless airflow amplifier (250, 350, 450, 250A-F, 450A-B) for providing an operative airflow (256, 256A-B) to operate the bladeless airflow amplifier (250, 350, 450, 250A-F, 450A-B).

2. The ventilation system (201, 401) of claim 1, wherein the bladeless airflow amplifier (250, 350, 450, 250A-F, 450A-B) is coupled to an airflow outlet opening (132, 232, 232A-B) in the turbomachine enclosure (220) to pass the airflow (125, 126, 224, 226, 252, 253, 255, 256, 352, 452, 470) out of the turbomachine enclosure (220).

3. The ventilation system (201, 401) of claim 1 or claim 2, further comprising another bladeless airflow amplifier (250, 350, 450, 250A-F, 450A-B) fluidly coupled to the amplifier airflow source (254, 254A-C, 454, 454A-C), the another bladeless airflow amplifier (250, 350, 450, 250A-F, 450A-B) coupled to another airflow outlet opening (132, 232, 232A-B) in a portion (276) of the turbomachine enclosure (220).

4. The ventilation system (201, 401) of any preceding claim, wherein the bladeless airflow amplifier (250, 350, 450, 250A-F, 450A-B) is coupled to an airflow inlet opening (130, 230) in the turbomachine enclosure (220) to pass the airflow (125, 126, 224, 226, 252, 253, 255, 256, 352, 452, 470) into the turbomachine enclosure (220).

5. The ventilation system (201, 401) of any preceding claim, wherein the bladeless airflow amplifier (250, 350, 450, 250A-F, 450A-B) includes a first bladeless airflow amplifier (250A) coupled to an airflow outlet opening (132, 232, 232A-B) in the turbomachine enclosure (220) to pass the airflow (125, 126, 224, 226, 252, 253, 255, 256, 352, 452, 470) out of the turbomachine enclosure (220), and a second bladeless airflow amplifier (250B) coupled to an airflow inlet opening (130, 230) in the turbomachine enclosure (220) to pass the airflow (125, 126, 224, 226, 252, 253, 255, 256, 352, 452, 470) through the turbomachine enclosure (220).

6. The ventilation system (201, 401) of any preceding claim, wherein the amplifier airflow source (254, 254A-C, 454, 454A-C) includes a first amplifier airflow source (254A, 454A) fluidly coupled to the first bladeless airflow amplifier (250A) for providing a first operative airflow (256A) to operate the first bladeless airflow amplifier (250A), and a second amplifier airflow source (254B) fluidly coupled to the second bladeless airflow amplifier (250B) for providing a second operative airflow (256B) to operate the second bladeless airflow amplifier (250B).

7. The ventilation system (201, 401) of any preceding claim, wherein the turbomachine (100, 200, 300, 400) includes a gas turbine engine (100, 104, 304) and an exhaust collector (360) operatively coupled to the gas turbine engine (100, 104, 304), and
wherein the bladeless airflow amplifier (250, 350, 450, 250A-F, 450A-B) includes a first bladeless airflow amplifier (250A) coupled to a first airflow outlet opening (232A) upstream of the exhaust collector (360) and a second bladeless airflow (250B) amplifier coupled to a second airflow (232B) outlet opening downstream of the exhaust collector (360).

8. The ventilation system (201, 401) of any preceding claim, wherein the amplifier airflow source (254, 254A-C, 454, 454A-C) includes a plurality of amplifier airflow sources (254, 254A-C, 454, 454A-C) fluidly coupled to the bladeless airflow amplifier (250, 350, 450, 250A-F, 450A-B) to provide the operative airflow (256).

9. The ventilation system (201, 401) of any preceding claim, wherein the amplifier airflow source (254, 254A-C, 454, 454A-C) includes a cooling fan (286) of a generator (288) that is operatively coupled to a turbomachine (100, 200, 300, 400), the cooling fan (286) providing at least a portion (276) of the operative airflow (256).

10. The ventilation system (201, 401) of any preceding claim, wherein the amplifier airflow source (254, 254A-C, 454, 454A-C) includes a compressor (102, 290) configured to provide an airflow (125, 126, 224, 226, 252, 253, 255, 256, 352, 452, 470) to a turbomachine (100, 200, 300, 400), the compressor (102, 290) providing at least a portion (276) of the operative airflow (256), and
further comprising a regulating valve (282) to modulate the airflow (125, 126, 224, 226, 252, 253, 255, 256, 352, 452, 470) from the compressor (102, 290) for use as the amplifier airflow) source (254, 254A-C, 454, 454A-C).

11. The ventilation system (201, 401) of any preceding claim, wherein the bladeless airflow includes a plurality of bladeless airflow amplifiers (250, 350, 450, 250A-F, 450A-B), each bladeless airflow amplifier (250, 350, 450, 250A-F, 450A-B) coupled to a separate turbomachine enclosure (220), and
wherein the amplifier airflow source (254, 254A-C, 454, 454A-C) fluidly couples to each of the plurality of bladeless airflow amplifiers (250, 350, 450, 250A-F, 450A-B) for providing the operative airflow (256) to operate each of the plurality of bladeless airflow amplifiers (250, 350, 450, 250A-F, 450A-B).

12. The ventilation system (201, 401) of any preceding claim, further comprising an internal bladeless airflow amplifier (250, 350, 450, 250A-F, 450A-B) positioned within the turbomachine enclosure (220).

13. The ventilation system (201, 401) of any preceding claim, wherein the internal bladeless airflow amplifier (250, 350, 450, 250A-F, 450A-B) surrounds at least a portion (276) of a turbomachine (100, 200, 300, 400).

14. A system, comprising:
a gas turbine engine enclosure (220);
a gas turbine engine (100, 104, 304) disposed in the gas turbine engine enclosure (220); and
a ventilation system (201, 401) coupled to the gas turbine engine enclosure (220), wherein the ventilation system (201, 401) includes:
a bladeless airflow amplifier (250, 350, 450, 250A-F, 450A-B) configured to pass an airflow (125, 126, 224, 226, 252, 253, 255, 256, 352, 452, 470) through at least a portion (276) of the gas turbine engine enclosure (220), and
an amplifier airflow source (254, 254A-C, 454, 454A-C) fluidly coupled to the bladeless airflow amplifier (250, 350, 450, 250A-F, 450A-B) for providing an operative airflow (256) to operate the bladeless airflow amplifier (250, 350, 450, 250A-F, 450A-B).

15. The system of any preceding claim, wherein the bladeless airflow amplifier (250, 350, 450, 250A-F, 450A-B) is coupled to an airflow outlet opening (132, 232, 232A-B) in the gas turbine engine enclosure (220) to pass the airflow (125, 126, 224, 226, 252, 253, 255, 256, 352, 452, 470) out of the gas turbine engine enclosure (220).
